# NEUE EUROPÄISCHE PATENTSCHRIFT

(11) **EP 0 245 655 B2**
(45) Veröffentlichungstag und Bekanntmachung des Hinweises auf die Entscheidung über den Einspruch: **24.09.1997**
(45) Hinweis auf die Patenterteilung: 19.11.1992
(21) Anmeldenummer: 87105238.7
(22) Anmeldetag: 08.04.1987
(51) Int. Cl.: B09B 5/00

(54) **Verfahren zur Entfernung von flüchtigen Schadstoffen aus kontaminierten Böden, Sanden, Schlämmen und vergleichbaren Feststoffaggregaten und Rückständen**
Method of removing volatile harmful materials from contaminated soils, sands, sludges and like solid aggregates and residues
Procédé pour éliminer des matières nocives volatiles de sols, sables, boues contaminés et d'agrégats solides et résidus analogues

(30) Priorität: 08.04.1986 DE 3611783; 02.03.1987 DE 3706684
(43) Veröffentlichungstag der Anmeldung: 19.11.1987
(73) Patentinhaber: von Beckerath, Kurt, Dr.rer.nat.,Dipl.-Chem., D-83646 Bad Tölz (DE)
(72) Erfinder: von Beckerath, Kurt, Dr.rer.nat.,Dipl.-Chem., D-83646 Bad Tölz (DE)
(74) Vertreter: Ruschke, Olaf, Dipl.-Ing.

(56) Entgegenhaltungen:
- EP-A- 0 003 216
- DE-A- 3 447 079
- US-A- 3 654 705
- US-A- 4 087 276
- US-A- 4 139 462
- US-A- 4 319 410
- PT CIVIELE TECHNIEK, Band 39, Nr. 1, Januar 1984, Seiten 7-15, Rijswijk, NL; F.S. HEINIS et al.: "Bodemsaneringstechnieken/1, verwijdering van bodemverontreiniging"
- IDEM
- PATENT ABSTRACTS OF JAPAN, Band 10, Nr. 166 (C-353)[2222], 13. Juni 1986; & JP-A-61 018 487 (KANEKO SHOJI K.K.) 27-01-1986
- IDEM

## Beschreibung

Die Erfindung betrifft ein Verfahren zur thermischen Abtrennung von flüchtigen, oft heterogen zusammengesetzten Inhaltsstoffen anorganischer Natur, nämlich von Quecksilber und/oder Quecksilberverbindungen und/oder Arsen und/oder Antimon zusammen mit dem Wasseranteil aus verunreinigten Böden, Sanden sowie anderen vergleichbaren Feststoffaggregaten und Rückständen.

Die US-PS 3,654,705 beschreibt ein Trocknungsverfahren, insbesondere für Obst- und Gemäseabfälle, bei dem wasserhaltige Schlämme in einem indirekt beheizten Wirbelbett, welches unter anderem die sich anreichernde Feststoffsubstanz durch Zermahlen pulverisiert, unter Anwendung der Brüdenkompression getrocknet werden. Das Wasser wird verdampft und die pulverisierte Feststoffmatrix mit dem Dampfstrom ausgetragen. Behandelt werden insbesondere organische Schlämme, die aufgrund ihrer hohen Fracht an biologisch abbaubarem organischem Material Vorfluter oder Kläranlagen belasten.

Bei Altlasten und anderen kontaminierten Standorten werden im Boden häufig organische und/oder anorganische Schadstoffe als Einzelsubstanzen oder als Stoffmischungen vorgefunden. Besonders problematisch sind die mit Quecksilber belasteten Böden.

In der Literatur werden verschiedene Möglichkeiten zur Entfernung von Schadstoffen aus solchen kontaminierten Böden diskutiert. Grundsätzlich werden dabei Verfahren in situ oder Verfahren on side angesprochen.

Bei den in situ-Verfahren werden die Schadstoffe im Boden durch chemische Umsetzung in andere Stoffe überführt, die bezüglich ihrer Umweltrelevanz weniger gefährlich sind. Neben chemischen Umsetzungen werden auch biologische Verfahren vorgeschlagen, wobei z.B. bestimmte Bakterien die organische Substanz abbauen sollen.

On side-Verfahren verlangen zunächst einen Bodenaushub. Chemische Umsetzungen und biologische Abbaureaktionen werden hier neben extraktiven und thermischen Verfahren diskutiert.

Die thermischen Verfahren werden insbesondere dann angewendet, wenn der Boden durch organische Chemikalien verunreinigt ist. Hierbei wird in der Regel angestrebt, die organische Belastung in einem thermischen Prozeß vollständig zu oxidieren. Dies bedingt, daß die Abgase des Behandlungsprozesses in der Regel in einem Nachverbrennungsprozeß bei Temperaturen von mehr als 800°C verbrannt werden müssen. Hierbei ist es erforderlich, auch den aus dem Boden freigesetzten Wasserdampf auf diese Temperaturen zu erhitzen.

Derartige thermische Verfahren sind beispielsweise aus US-A-4 087 276, EP-A-0 003 216 und aus "PT Civile Techniek", 1984, Seiten 7 bis 15, bekannt. Bei dem zuerst genannten Verfahren, das als Trockendestillation unter Unterdruck eingestuft werden kann, wird ein mit Quecksilber verseuchter und auf einen hohen Trockengehalt vorentwässerter Schlamm ausgedampft. Die dabei mitausgedampfte Restfeuchte des Schlammes dient als Schleppmittel. Da der Quecksilberabgang in die Atmosphäre bei diesem Verfahren immer noch 100 µg/Nm³ beträgt, ist dieses Verfahren wegen zu hoher Umweltbelastung großtechnisch nicht anwendbar.

Das in EP-A-0 003 216 beschriebene Verfahren betrifft die thermische Behandlung von Schlämmen, die bei erhöhten Temperaturen und erhöhten Drucken einer Oxidation unterworfen werden. Der Heizwert des bei dieser Oxidation entstehenden Gas/Dampf-Gemisches wird durch indirekten Wärmeaustausch genutzt. In entsprechender Weise wird das aus der oben an letzter Stelle genannten Literaturstelle bekannte Verfahren durchgeführt. In keinem dieser bekannten Verfahren wird das kontaminierte Material mit einem von außen als Schleppmedium zugeführten heißen Gas direkt behandelt.

Es ist bereits vorgeschlagen worden, hinter Verbrennungsanlagen für Abfälle, die mit einem Rauchgaswäscher ausgestattet sind, die Restschadstoffe organischer wie anorganischer Natur durch Kondensation aus den Wasserdampf-gesättigten Rauchgasen zu entfernen.

Versuche an einer Bitukiesanlage in der Nähe von München haben an einem Bodenmaterial, das mit etwa 3 % Steinkohlenteerölen und Phenolen belastet war, folgendes gezeigt: Das Bodenmaterial war ein Kieselboden aus der Münchener Schotterebene. Es wurde nach vorheriger Klassierung in den Drehrohrofen der Bitukiesanlage gegeben und in diesem Rohr gegen eine Feuerung auf 270°C erhitzt. Messungen in den stark mit Wasserdampf beaufschlagten Abgasen dieser Anlage zeigten CH-Belastungen von 1 600 mg/Nm³. Das behandelte Kiesmaterial war frei von Kohlenwasserstoffen.

Ähnliche Versuche sind aus niederländischen Veröffentlichungen bekannt. Hier wurde versucht, die CH-haltigen Abgase in einer Nachbrennkammer vollständig zu oxidieren.

Aufgabe der hier beschriebenen Erfindung war es, organische und anorganische flüchtige Inhaltsstoffe aus kontaminierten Böden, Sanden und vergleichbaren Feststoffaggregaten und Rückständen thermisch auszutreiben und gleichzeitig die abgezogenen verflüchtigten Komponenten sicher zu entsorgen.

Es wurde gefunden, daß diese Aufgabe erfindungsgemäß dadurch gelöst werden kann, daß die kontaminierten Böden direkt mit einem Heißgas oder Heißdampf behandelt werden und daß die nach der thermischen Behandlung, die vorzugsweise bei 200 bis 700°C durchgeführt wird, erhaltenen Behandlungsgase in einem indirekten Kühler kondensiert und danach von den überdestillierten Schadstoffkomponenten befreit werden. Dabei kann die Flüchtigkeit der in den kontaminierten Böden enthaltenen Inhaltsstoffe aufgrund der herrschenden Azeotropie-Verhältnisse, beispielsweise durch die Anwesenheit von Wasser in den Böden, günstig beeinflußt werden.

Gegenstand der Erfindung ist ein Verfahren gemäß Anspruch 1.

Die vom Wasserdampf und von den kondensierbaren Schadstoffen befreiten Behandlungsgase können dann im Bedarfsfall in einer Absorptionsanlage nachbehandelt oder durch zusätzliche Kühlung in einem weiteren Kühler so weit abgekühlt werden, daß die darin enthaltenen Schadstoffe durch Taupunktunterschreitung an den Kühlflächen abgeschieden und aus dem Gasstrom entfernt werden können, oder den Feuerungsbrennern zugeführt werden.

Bevorzugte Ausgestaltungen des erfindungsgemäßen Verfahrens sind in den Unteransprüchen beschrieben.

Der Vorteil dieser Verfahrensweise besteht darin, daß der Erhitzungsprozeß durch gezielte Energiezufuhr gegebenenfalls über die Fördergeschwindigkeit des kontaminierten Gutes so gesteuert werden kann, daß die jeweils vorhandenen Schadstoffkomponenten aus dem Bodenmaterial zusammen mit seinem natürlichen Wassergehalt abgedampft werden. Das trockene Bodenmaterial durchläuft bei direkter Beheizung kurzzeitig die Feuerungszone, so daß anhaftende organische Restsubstanz hier noch oxidiert wird. Darüber hinaus wird das erhitzte Bodenmaterial zweckmäßigerweise in einem Silo noch längere Zeit auf der Temperatur gehalten, die es am Drehrohrende erreicht hat. Dadurch können gegebenenfalls noch Reste nicht verdampfter flüchtiger Anteile in das System abdampfen und zersetzt bzw. kondensiert werden.

An Stelle von Böden können nach dem Verfahren der Erfindungmauch verunreinigte Sande und vergleichbare Feststoffaggregate und Rückstände erfolgreich dekontaminiert werden. Es wurde gefunden, daß die Hg-, As- und Sb- Anteile weitgehend in das Kondensat überführt werden und dort gezielt aufgearbeitet werden können.

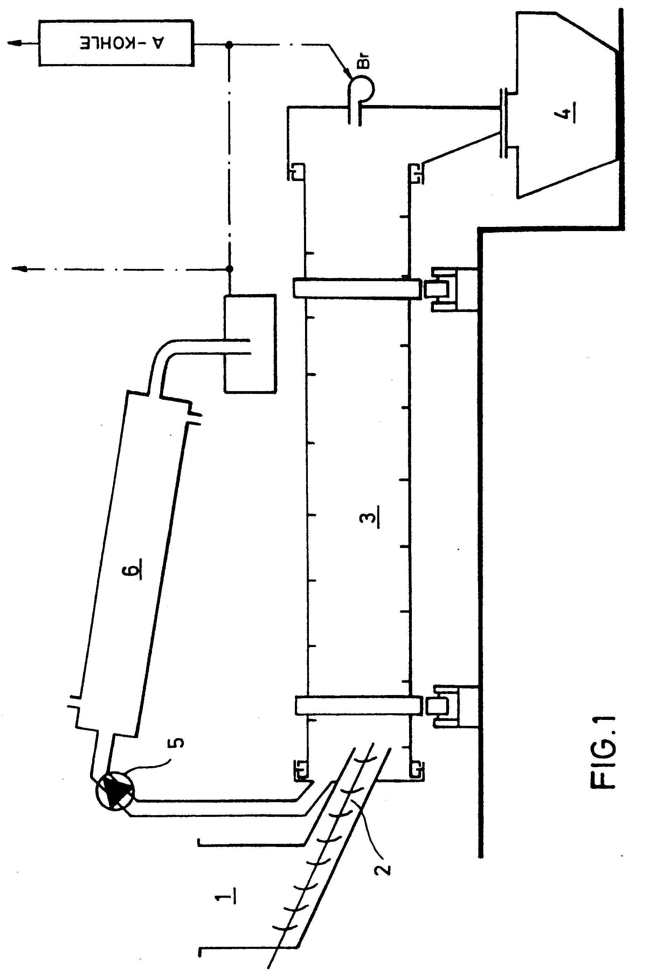

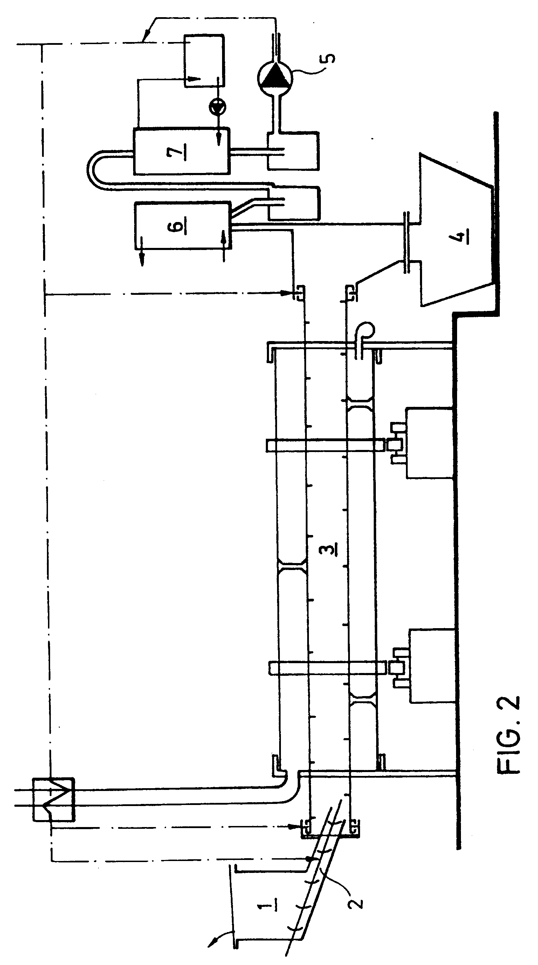

Der Verfahrensablauf bevorzugter Ausgestaltungen des Verfahrens der Erfindung wird in den Figuren 1 und 2 der Zeichnungen dargestellt.

Fig. 1 erläutert eine direkte Beheizung des Ofens.

Das mit flüchtigen Schadstoffen kontaminierte Bodenmaterial wird, gegebenenfalls nach Zerkleinerung, über den Aufgabetrichter 1 und die Fördereinrichtung 2 in einen Ofen (hier als Drehrohrofen 3 dargestellt) gefördert. Eingebaute Schikanen fördern das Gut im Drehrohr in Richtung Heißbodensilo 4.

Die thermische Behandlung in dem Ofen erfolgt mit Heißgasen aus Brennern oder mit Heißdampf aus Heißdampflanzen. Entstehende Dämpfe werden unter Anlegung eines Unterdruckes im System über das Sauggebläse 5 zum Wärmetauscher 6 geleitet, in dem durch ein geeignetes Kühlmedium die kondensierbaren Anteile des Abgases ausgeschieden und der Behandlung zugeführt werden. Die vom Wasserdampf und anderen Schadgasen befreiten und daher in ihrem Volumen verringerten, gekühlten Abgase werden je nach Bedarf entweder teilweise oder vollständig der Brennerluft bzw. dem Ofen oder einer Absorptionsanlage zugeführt.

Fig. 2 erläutert eine indirekte Beheizung des Ofens.

Das mit flüchtigen Schadstoffen kontaminierte Bodenmaterial wird, gegebenenfalls nach Zerkleinerung, über den Aufgabetrichter 1 und die Fördereinrichtung 2 in einen Ofen (hier als Drehrohrofen 3 dargestellt) gefördert. Eingebaute Schikanen fördern das Gut im Drehrohr in Richtung Heißbodensilo 4.

Die Beheizung des Ofens erfolgt indirekt mit Heißgasen. Die Behandlung in dem Ofen erfolgt mit Heißgasen (nicht dargestellt). Entstehende Dämpfe werden unter Anlegung eines Unterdruckes im System über das Saugzuggebläse 5 zu den Wärmetauschern 6, 7 geleitet, in denen durch geeignete Kühlmedien die kondensierbaren Anteile des Abgases ausgeschieden und der Behandlung zugeführt werden. Die vom Wasserdampf und anderen Schadgasen befreiten und daher in ihrem Volumen verringerten, gekühlten Abgase werden gegebenenfalls einer weiteren Tieftemperaturkühlung zugeführt. Gegebenenfalls kann der gesamte Prozeß in einer Inertgasatmosphäre durchgeführt werden. Tieftemperaturkühlung bedeutet Kühlen auf eine Temperatur von mindestens +5°C, vorzugsweise auf Temperaturen im Bereich von 0°C bis -30°C, z.B. auf -10°C oder -20°C. Zuweilen sind noch tiefere Temperaturen anwendbar. Zweckmäßig wird das Restgas vor der Tieftemperaturkühlung getrocknet.

Die Erfindung wird durch das folgende Beispiel erläutert.

### Beispiel

### Desorption von Hg-belasteten Böden

Das Beispiel zeigt, daß Quecksilberverbindungen (organische und anorganische) durch thermische Energie mittels Inertgas desorbierbar sind.

Für die Untersuchungen wurde eine Bodenprobe von einem Altlastgelände herangezogen, deren Kontamination mit Hg-haltigen Verbindungen aus Voruntersuchungen bekannt war.

Zur Einleitung der thermischen Energie wurde ein thermostatisierbarer Ofen mit einem Quarzrohr verwendet, durch das ein Inertgas (N₂) geleitet werden konnte. Dieses Rohr war mit einem U-Rohr verbunden, das in ein Dewar-Gefäß mit flüssigem Stickstoff eintauchte. Zwischen dem Quarzrohr und dem U-Rohr kann gegebenenfalls eine Trockenzone vorgesehen sein, in der Wasser an einem Trockenmittel absorbiert wird. Am Ausgang der Kühlfalle wurde ein mit Aktivkohle gefülltes Glasrohr angeschlossen.

| Versuchsparameter: | |
|---|---|
| Desorptionszeit: | konstant 15 Minuten |
| Temperaturen: | 140°C, 300°C, 600°C |
| N₂-Strom: | 120 ml/min |
| Einwaagen: | ca. 3 g in Platin-Schiffchen. |

Die feuchte Einwaage wurde in einem Platin-Schiffchen in den Ofen verbracht und der N₂-Strom eingeschaltet. Nach der Reaktionszeit von 15 min wurde das Kühlrohr abgenommen und nach kurzer Auftauphase (1 min) mit 5 ml Königswasser versetzt. Die Säure wurde durch Nachspülen quantitativ in ein 50 ml-Meßkölbchen überführt und mit destilliertem Wasser aufgefüllt.

Die Quecksilberbestimmungen von Boden, Kondensat und Aktivkohle wurden mittels AAS + MHS durchgeführt.

### Tabellarische Zusammensetzung der Ergebnisse

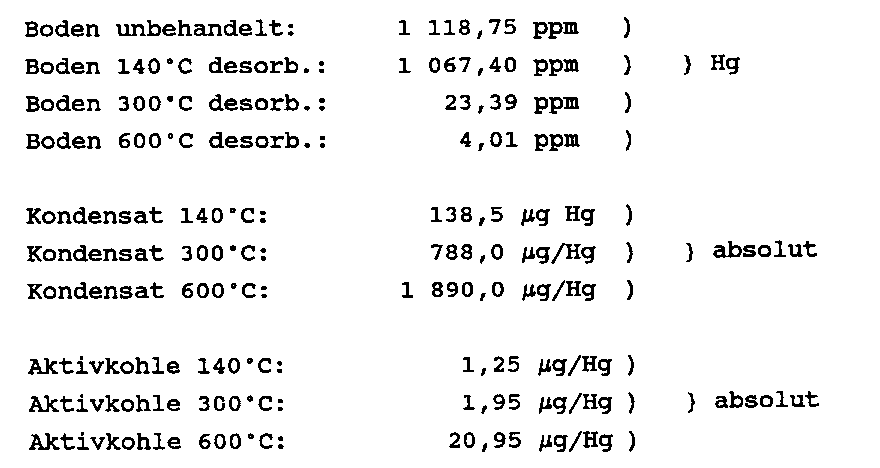

### Hg-Massenbilanz

| °C | µg Hg in der Einwaage | µg Hg im behandelten Boden | desorbierte µg Hg | µg Hg auf der Kohle | µg Hg * in der Kühlfalle |
|---|---|---|---|---|---|
| 600 | 3837,30 | 13,75 | 3823,55 | 20,95 | 1890,0 |
| 300 | 3233,18 | 67,60 | 3165,58 | 1,95 | 788,0 |
| 140 | 3814,94 | 3640,00 | 174,94 | 1,25 | 138,5 |

Der Versuch zeigt, daß Quecksilberverbindungen aus Bodenmaterial durch thermische Einwirkung gut desorbierbar sind.

Bereits bei 300°C resultiert eine Restbelastung von nur 23,4 ppm bei einer Ausgangskontamination von über 1 000 ppm.

## Patentansprüche

1. Verfahren zur thermischen Abtrennung von flüchtigen, oft heterogen zusammengesetzten Inhaltsstoffen anorganischer Natur, nämlich von Quecksilber und/oder Quecksilberverbindungen und/oder Arsen und/oder Antimon zusammen mit dem Wasseranteil aus verunreinigten Böden, Sanden sowie anderen vergleichbaren Feststoffaggregaten und Rückständen, wobei das kontaminierte Material, das mit Quecksilber und/oder Quecksilberverbindungen und/oder Arsen und/oder Antimon verunreinigt ist, durch direkte oder indirekte Beheizung in einem geeigneten Ofen beheizt und mit zugeführten Heißgasen oder Heißdampf behandelt wird, und die entstehenden wasserdampf- und schadstoffhaltigen Behandlungsgase einer anschließenden Kondensation dergestalt unterworfen werden, daß der Hauptanteil des Wasserdampfes aus dem System auskondensiert und als flüssige Phase abgezogen und naßchemisch oder physikalisch von den Schadstoffen befreit wird und die Restgase gegebenenfalls thermisch nachbehandelt oder durch Absorption von Restschadstoffen befreit werden.

2. Verfahren nach Anspruch 1, wobei die Restgase nach der ersten Kondensation einer weiteren Tieftemperaturkondensation zur Restabscheidung der Schadstoffe unterworfen werden.

3. Verfahren nach Anspruch 1 oder 2, wobei die Restgase durch Absorption an Aktivkohle von den Restschadstoffen befreit werden.

4. Verfahren nach einem der Ansprüche 1 bis 3, wobei das zu behandelnde Material kontinuierlich oder chargenweise in einen Ofen eingetragen und am entgegengesetzten Ende des Eintrags mit Heißgasen aus einem Brenner behandelt wird, um das Verdampfen des Wassergehaltes und das Abtreiben der Schadstoffe zu gewährleisten.

5. Verfahren nach einem der Ansprüche 1 bis 4, wobei das zu behandelnde Material kontinuierlich oder chargenweise in einen geeigneten Ofen eingetragen wird, der indirekt beheizt wird.

6. Verfahren nach Anspruch 5, wobei in den indirekt beheizten Ofen ein Inertgasstrom eingeleitet wird, um Oxidationen zu vermeiden.

7. Verfahren nach einem der Ansprüche 1 bis 3, wobei das zu behandelnde Material kontinuierlich oder chargenweise in einen geeigneten Ofen eingebracht und dort mit Heißdampf behandelt wird, so daß der Wassergehalt und am Boden anhaftende flüchtige Schadstoffe verdampft werden.

8. Verfahren nach einem der Ansprüche 1 bis 7, wobei die entstehenden Behandlungsgase über einen Saugzug einem oder mehreren Kondensatoren mit indirekter Kühlung zugeführt werden, wobei in einem ersten Kühler der enthaltene Wasserdampf vorzugsweise bis auf den Wassergehalt der Umgebungstemperatur der Luft auskondensiert und in flüssiger Phase abgetrennt und in weiteren Kühlern der Restgasstrom, gegebenenfalls nach Trocknen, einer Tieftemperaturkühlung unterzogen wird.

9. Verfahren nach einem der Ansprüche 1 bis 8, wobei die mit der Wasserphase auskondensierten Schadstoffe abgetrennt oder durch eine chemische Reaktion wie Oxidation, Reduktion oder Fällung aus der Wasserphase entfernt werden.

10. Verfahren nach einem der Ansprüche 1 bis 9, wobei die nach der Kondensation resultierenden und im wesentlichen von Wasserdampf befreiten Restgase einer thermischen oder absorptiven Nachbehandlung unterzogen werden.

11. Verfahren nach Anspruch 8 oder 9, wobei leichtflüchtige Schadstoffe, die in der ersten Kondensationsstufe nicht restlos abgeschieden werden, in einer zweiten Tieftemperatur-Kondensationsstufe aus dem Gasstrom auskondensiert werden.

12. Verfahren nach einem der Ansprüche 1 bis 11, wobei das der thermischen Behandlung unterzogene Material in einem ausreichend großen Bunker so lange gesammelt wird, bis unter Ausnutzung der dem Material innenwohnenden Wärme noch vorhandene Spuren an Restschadstoffen aus dem Material abdampfen können, die dem Behandlungssystem zugeführt werden.

13. Verfahren nach einem der Ansprüche 1 bis 12, wobei das kontaminierte Material in einem Drehrohrofen oder Wirbelbettofen behandelt wird.

## Claims

1. A process for thermally removing volatile ingredients, often of heterogenous composition, of an inorganic nature, namely, of mercury and/or mercury compounds and/or arsenic and/or antimony, together with the water content, from contaminated soils, sands and other comparable solids aggregates and residues, wherein the contaminated material polluted with mercury and/or mercury compounds and/or arsenic and/or antimony is heated directly or indirectly in a suitable oven and is treated with externally supplied hot gases or hot steam, the steam-containing and pollutant-containing treatment gases so generated are subjected to subsequent condensation in a manner to remove most of the steam from the system by condensation and to withdraw it as a liquid phase and then removing the pollutants therefrom by wet-chemical or physical means, with the residual gases possibly subjected subsequently to thermal post-treatment or cleared of residual noxious substances by absorption.

2. Method according to Claim 1, wherein the residual gases undergo a further low-temperature condensation process, after the first condensation process, in order to separate the residual pollutants.

3. Method according to Claim 1 or Claim 2, wherein the residual pollutants are removed from the residual gases by absorption on activated carbon.

4. Method according to one of Claims 1 to 3, wherein the material to be treated is admitted to an oven continuously or in batches and, at the opposite end of the oven to its input, is treated with superheated gases from a burner in order to vaporise its water content and separate the pollutants.

5. Method according to one of Claims 1 to 4, wherein the material to be treated is admitted continuously or in batches to a suitable, indirectly-heated oven.

6. Method according to Claim 5, wherein a stream of inert gas is admitted to the indirectly-heated oven in order to prevent oxidation.

7. Method according to one of Claims 1 to 3, wherein the material to be treated is admitted to a suitable oven continuously or in batches and is treated therein with superheated steam so that the water content and volatile pollutants adhering to the soil are vaporised.

8. Method according to one of Claims 1 to 7, wherein the gases resulting from the treatment are supplied, by means of an induced draught, to one or more indirectly-cooled condensers, wherein the steam content is condensed out, preferably up to the specific humidity of the air at the ambient temperature, and separated as a liquid phase in a first condenser and the residual gas stream is subjected to a low-temperature cooling process in further condensers after drying, if necessary.

9. Method according to one of Claims 1 to 8, wherein the pollutants condensed out with the aqueous phase are either separated by a chemical reaction such as oxidation or reduction, or removed from the aqueous phase by precipitation.

10. Method according to one of Claims 1 to 9, wherein the residual gases which result from the condensation and from which the steam has substantially been removed are subjected to a thermal or absorption after-treatment.

11. Method according to Claim 8 or Claim 9, wherein highly volatile pollutants which are not fully separated in the first condensation stage are condensed out of the gas stream in a second low-temperature condensation stage.

12. Method according to one of Claims 1 to 11, wherein the material which has undergone the thermal treatment is collected in a silo of an adequate size for sufficient time to enable use to be made of the heat remaining in the material in order to vaporise from the material any traces of residual pollutants still present, the residual pollutants being admitted to the treatment system.

13. Method according to one of Claims 1 to 12, wherein the contaminated material is processed in a revolving tubular oven or a fluidisation oven.

## Revendications

1. Procédé pour la séparation par voie thermique de substances volatiles de nature inorganique à composition fréquemment hétérogène, voire de mercure et/ou composés de mercure et/ou arsenic et/ou antimoine, conjointement avec la fraction d'eau, de sols, de sables, ainsi que d'agrégats de matières solides et de résidues comparables, par lequel on chauffe la matière contaminée de mercure et/ou composés de mercure et/ou arsenic et/ou antimoine par réchauffement direct ou indirect dans un four approprié et on la traite avec de la vapeur d'eau chaude ou des gaz chauds fournis extérieurement, et on soumet à une condensation ultérieure les gaz de traitement qui se forment et qui contient de la vapeur d'eau et des substances nuisibles, de sorte que l'on extrait par condensation la fraction principale de la vapeur d'eau hors du système, on la retire sous forme d'une phase liquide et on la libère des substances nuisibles par voie chimique humide or par voie physique, et on traite ultérieurement les gaz résiduels éventuellement par voie thermique ou bien on les libére des substances nuisibles résiduelle par absorption.

2. Procédé selon la revendication 1, dans lequel on soumet les gaz résiduels, suite à la première condensation, à une condensation ultérieure à basse température à des fins de séparation résiduelle des substances nuisibles.

3. Procédé selon la revendication 1 ou 2, dans lequel on libère les gaz résiduels des substances nuisibles résiduelles par absorption sur du charbon actif.

4. Procédé selon l'une quelconque des revendications 1 à 3, dans lequel on charge dans un four la matière à traiter, en continu ou par lots, et on la traite à l'extrémité opposée à celle de l'admission avec des gaz chauds provenant d'un brûleur pour garantir l'évaporation de la teneur en eau, ainsi que l'évacuation des substances nuisibles.

5. Procédé selon l'une quelconque des revendications 1 à 4, dans lequel on charge la matière à traiter en continu ou par lots dans un four approprié que l'on chauffe de manière indirecte.

6. Procédé selon la revendication 5, dans lequel on introduit un courant de gaz inerte dans le four à chauffage indirect, pour éviter des oxydations.

7. Procédé selon l'une quelconque des revendications 1 à 3, dans lequel on charge la matière à traiter en continu ou par lots dans un four approprié et on l'y traite avec de la vapeur chaude, si bien que la teneur en eau et les substances nuisibles volatiles adhérant au fond s évaporent.

8. Procédé selon l'une quelconque des revendications 1 à 7, dans lequel on achemine à l'intervention d'un tirage par aspiration les gaz de traitement qui se forment à un ou plusieurs condensateurs à refroidissement indirect, dans lesquels, dans un premier refroidisseur, on extrait par condensation la vapeur d'eau qui y est contenue de préférence jusqu'à ce que l'on obtienne la teneur en eau correspondant à celle de la température ambiante de l'air et on la sépare en phase liquide et, dans d'autres refroidisseurs, on soumet le courant de gaz résiduel, éventuellement après séchage, à un refroidissement à basse température.

9. Procédé selon l'une quelconque des revendications 1 à 8, dans lequel on sépare les substances nuisibles extraites par condensation avec la phase aqueuse ou bien on les élimine hors de la phase aqueuse à l'intervention d'une réaction chimique telle que l'oxydation, la réduction ou la précipitation.

10. Procédé selon l'une quelconque des revendications 1 à 9, dans lequel on soumet à un traitement ultérieur par voie thermique ou par absorption les gaz résiduels résultant de la condensation, essentiellement libérés de la vapeur d'eau.

11. Procédé selon la revendication 8 ou 9, dans lequel on extrait par condensation hors du courant de gaz, au cours d'une seconde étape de condensation à basse température, les substances nuisibles extrêmement volatiles qui n'ont pas été complètement séparées au cours de la première étape de condensation.

12. Procédé selon l'une quelconque des revendications 1 à 11, dans lequel on rassemble dans un réservoir suffisamment grand la matière soumise au traitement thermique aussi longtemps que, au cours de l'utilisation des chaleurs internes à la matière, peuvent être évaporées de la matière des traces encore présentes de substances nuisibles résiduelles, que l'on achemine au système de traitement.

13. Procédé selon l'une quelconque des revendications 1 à 12, dans lequel on traite la matière contaminée dans un four rotatif ou dans un four à lit fluidisé.
